Europäisches Patentamt

European Patent Office

Office européen des brevets

(19)

(11) Publication number: **0 190 741 B1**

## EUROPEAN PATENT SPECIFICATION

(12)

(45) Date of publication of patent specification: **17.06.92**   (51) Int. Cl.⁵: **B01D  61/00**, F03B 13/00

(21) Application number: **86101466.0**

(22) Date of filing: **05.02.86**

(54) **Pump-water wheel system.**

(30) Priority: **06.02.85 JP 19900/85**

(43) Date of publication of application:
**13.08.86 Bulletin   86/33**

(45) Publication of the grant of the patent:
**17.06.92 Bulletin   92/25**

(84) Designated Contracting States:
**DE FR GB IT**

(56) References cited:
**FR-A- 2 281 782
FR-A- 2 449 655**

**REVUE TECHNIOUE SULZER, vol. 66, no. 3,
1984, pages 29-38, Winterthur, CH; W. BOL-
LIGER et al.: "Pompes et turbines dans les
installations d'osmose inverse"**

(73) Proprietor: **EBARA CORPORATION
11-1, Haneda Asahi-cho
Ota-ku Tokyo, 144(JP)**

(72) Inventor: **Mimura, Yoshio
4-4-63, Kinugasa Sakae-cho
Yokosuka-shi Kanagawa-ken(JP)**

(74) Representative: **Geyer, Ulrich F., Dr.
Dipl.-Phys. et al
WAGNER & GEYER Patentanwälte Gewuerz-
muehlstrasse 5 Postfach 246
W-8000 München 22(DE)**

EP 0 190 741 B1

## Description

The present invention relates to a system comprising a combination of a pump, a drive source for the pump and a water wheel and more particularly to such a system in which the pump with a drive source and the water wheel are coupled with each other to recover a part of the energy consumed by the pump.

There have been many pumping systems in which high discharge pressure is required for several purposes, but after the pressurized liquid has been used for such purposes, the whole or part of such pressurized liquid is merely discharged away. In order to recover energy from such discharged liquid, most of such systems employ a water wheel to be driven by such discharged liquid. Such system may be installed in the chemical plants, air conditioning for buildings, etc.

A typical example of such a system is represented by a plant for producing fresh water from so-called brackish water such as subterranean water at sea side, or sea water itself. Such plant is generally referred to as a desalination plant. In such a desalination plant, it is generally necessary to guarantee the level of output of fresh water. However, the conditions of the brackish water, the amount of water required and the efficiency of the plant are subject to change depending on the time and/or season, etc. Therefore, at the time of planning such a plant, various studies are carried out beforehand to ascertain the demands likely to be placed on the system in the face of predictable changes. Further, at the time of completion of the plant, the prevailing conditions may have changed from those subsisting at the time of the studies. Therefore, in designing the plant due allowance for possible extra demand is made with respect to each part thereof so as to accommodate such unpredictable changes and thus the total accumulation of such allowances may result in the plant capacity becoming excessive. In the past, the ordinary operation of such plant has involved a valve being disposed on the discharge side of the pump to restrict or regulate the discharge pressure in accordance with various changes in the factors concerned. However, such operation is not economical in that almost the maximum amount of power required for the pump is consumed while part of the pump driving energy is merely consumed as resistance in the valve. In addition to the above, as the pressure of the rejected water in the RO module decreases, the run-away speed of the water wheel also decreases and some cases it may reach the value below the pump operating speed. As the result, the water wheel may become the resistance at that time instead of the power recovery equipment, or even if run-away speed is above the pump operating speed, the recovered energy may decrease very much. As described above, it is meaningless or sometimes harmful to couple the water wheel for energy recovering under such condition.

Therefore, it has been desired that such a plant as exemplified above may be operated more economically.

EPA-142 567, a document relevant under Art. 54(2) and (3) EPC for the designated contracting state France, describes a pump-water wheel unit wherein a pump is driven through a drive source and a water wheel is driven by part of the fluid delivered by said pump so as to recover part of the energy consumed by said pump and wherein said pump and said water wheel are coupled with each other so that torque is transmitted therebetween.

Attention is further drawn to FR-A-22 81 782 and FR-A-24 49 655 as well as Revue Technique Sulzer, vol. 66, no. 3, 1984, pages 29 to 38, Winterthur, CH. The latter document discloses a variety of configurations according to which a RO module is operated by electrically operated pump means using reversed-running pump means for saving energy.

It is an object of the present invention to provide a pump-water wheel system which may be operated economically when the system is given an excess capacity or allowance in order to guarantee the level of fresh water output of the system regardless of changes in the factors and conditions involved.

The above objects are accomplished in accordance with, the present invention by providing a reverse osmosis unit as claimed in the appended claim.

Further objects and advantages of the present invention will be further clarified when the ensuing description is reviewed with reference to the accompanying drawings, a brief explanation of which is summarized below.

Fig. 1 is a schematic illustration of the reverse osmosis system (RO system) incorporating the present invention;

Fig. 2 is a schematic illustration of the pressure head and the pipe friction loss head of a pump-water wheel shown in Fig. 1;

Fig. 3 shows the relationship between the resistance for the rejected water line and its flow rate;

Fig. 4 shows the relationship between the resistance for the produced water line and its flow rate;

Fig. 5 is an explanatory drawing showing the required head relative to the flow rate in the reverse osmosis system wherein a pump characteristic curve is added;

Fig. 6 is a graph for reviewing the operating condition of the pump; and

Fig. 7 is a graph explaining the properties of the water wheel.

For convenience of explanation, a desalination plant system is referred to since such system is a typical example of a plant in which the capacity is required to guarantee the level of output of produced water and in which the related conditions are subject to various changes.

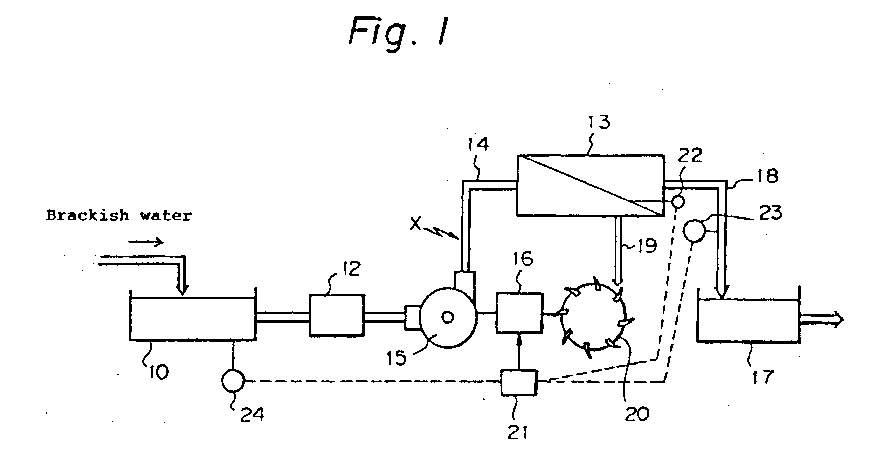

Referring now to Fig. 1, there is shown a simplified reverse osmosis system in a block diagram. The reverse osmosis system (hereinafter referred to as an RO system) is designed to produce fresh water from so-called brackish water (such as subterranean water or sea water). The brack ish water or untreated water to be processed flows into an intake tank 10. Thence, the brackish water is passed through a pre-treatment stage 12, which may include a sedimentation bath, filters, portions for adding agents such as disinfectant, solidifying agent, etc. The pre-treated water is fed to a Reverse Osmosis module (RO module) 13 through a feed line 14 by means of a high pressure pump 15 which is driven by a drive source 16 such as an electric motor. The RO module 13 produces fresh water under pressure through a membrane in the module and, then, the fresh water produced is fed to a fresh water tank 17 through a fresh water line 18 The water rejected at the RO module 13 is discharged through a discharge line 19. The rejected water retains some pressure and is thus directed to a water wheel 20 to rotate it so that the rotation of the wheel may be transmitted to the high pressure pump 15. As stated earlier, the RO system explained above has been constructed with a capacity having a certain allowance for unpredictable requirements. The main reason for such allowance is to guarantee the amount of fresh water produced. Furthermore, whilst before the installation of the system several factors and/or conditions are naturally investigated with a view to assisting in the planning of the system, there is inevitably difference between the conditions prevailing at the time of initial investigation and those found at the time of installation. In addition to such problems, other unavoidable factors causing the difference are present as follows:

(1) age deterioration of the membrane employed in the RO module;

(2) temperature variations in the or brackish water;

(3) density variations in the brackish water; and

(4) variations in the pressure applied on the RO module, etc.

In order to accommodate these variations, it is necessary to regulate the amount of liquid penetrating through the membrane of the RO module 13. Further, the whole operation needs to be regulated so that the quality of the water produced may be maintained at a proper level and the density of the water rejected may be maintained so as to avoid precipitation of salt which might adversely affect the performance of the membrane. On the other hand, even if it is possible for the operation to produce fresh water in quantities above and beyond the guaranteed amount, the facility for receiving such excess amount, such as the fresh cater tank 17, may not be large enough to accept the water produced. Therefore, the system is usually operated at the guaranteed output level.

Heretofore, a control valve has been disposed at a point "X" in the feed line 14 so as to regulate the rate of flow towards the RO module 13 by which means the pressure applied on the RO module 13 is also controlled. However, the above design leads to the creation of friction loss in the feed line 14 which in turn leads to a waste of energy. While sane of the energy may be recovered by the water wheel 20, if, by controlling the pressure in the RO module, water velocity at the nozzle 25 is made lower than the peripheral velocity of the water wheel, the water wheel will not recover the energy but instead it will rather create resistance. Of course, several factors, in addition to the pressure applied on the membrane, such as the density and/or the temperature of the untreated water, etc., have been taken into account in controlling the operation; however, the previous operation and system have not been considered satisfactory in terms of either efficiency or economy.

According to the present invention, a new system is introduced as a combination of a pump and a water wheel wherein the pump and the power recovery water wheel are coupled with each other so that torque is transmitted therebetween, the new system being designed to regulate the flow rate in the feed line 14 by controlling the rotational speed of the drive source 16 coupled with the high pressure pump 15. For this purpose, a control unit 21 is provided in combination with the drive source. Speed control of the drive source 16 associated with the control unit 21 may be effected by any of the known means such as a variable speed electric motor, an internal combustion engine with a regulatable accelerator or an engine having a governor, etc. The control unit 21 receives several signals, such as a signal representing the membrane condition from a senior 22, a flow rate signal of the produced water from a sensor 23, a density signal from a sensor 24 and some further signals representing pressures and temperatures at various points in the system if necessary. These signals have also been used in the past to control the valve at the point "X" in the feed line 14 so as to control the flow rate and the pressure. However, no attempt has been made to control the speed of the drive source.

For the sake of convenience, explanation is given with respect to the situation where there is a deviation between the circumstances prevailing at the stage of initial planning and those at the time of installation in terms of the salt density of the water to be treated becoming lower than that when the study was conducted at the initial planning stage. Also, it is assumed that other factors remained the same and that the RO module or the membrane employed in the module has reached a stable condition.

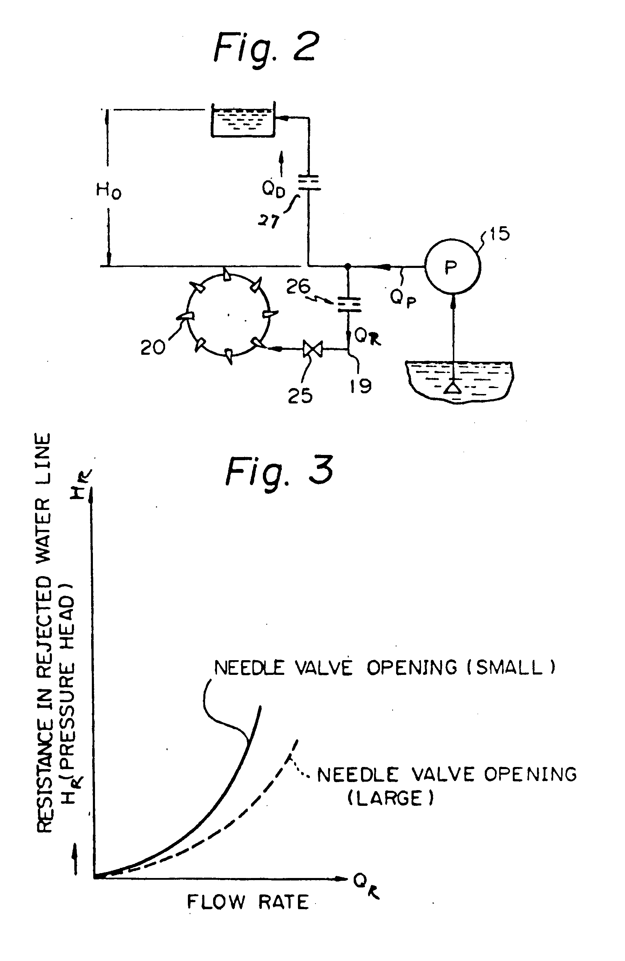

Then, the portion corresponding to the high pressure pump 15, the RO module 13 and the water wheel 20 may be schematically illustrated as shown in Fig. 2 if the minor resistance or loss in the several lines is regarded as negligible. In Fig. 2, 25 designates a nozzle having a needle valve disposed at the end of the discharge line 19 facing the water wheel 20. If the opening of the needle valve 25 is not changed, the resistance in the whole RO system becomes substantially the sum of the resistance 27 in the RO module 13 and the resistance of the nozzle 25 including the needle valve. The meanings of the symbols given in the figures are as follows.

$H_O$ :   required pressure for reverse osmosis process;

$H_P$ :   pump delivery head;

$H_R$ :   resistance in rejected water;

$Q_P$ :   amount of water fed by pump 15;

$Q_D$ :   amount of water penetrated through membrane; and

$Q_R$ :   flow rate of rejected water;

N :   revolution of pump-water wheel unit.

The resistance in the rejected water line shown in Fig. 3 indicates the resistance in the ordinate by water head ($H_R$) and the flow rate ($Q_R$) in the abscissa. As shown, if the opening degree is made small, the resistance becomes larger.

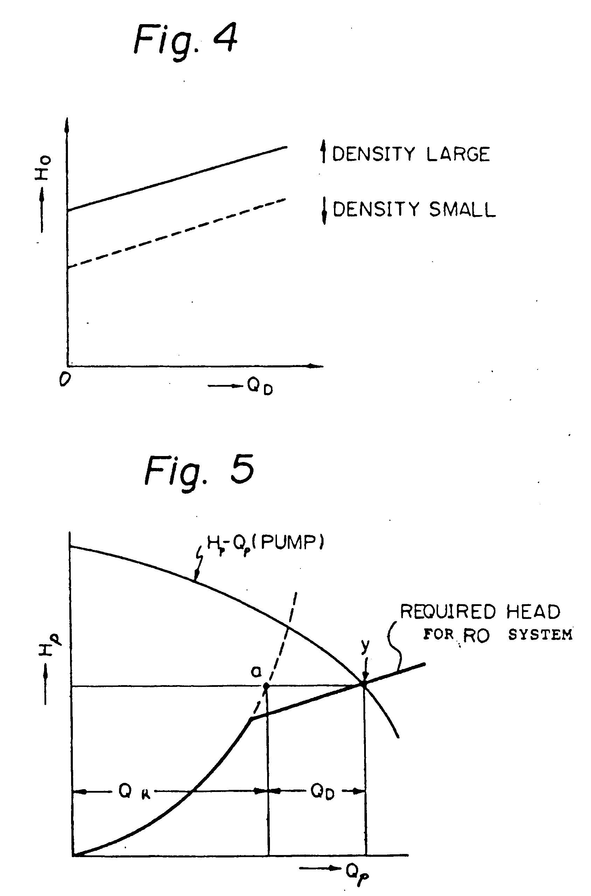

In Fig. 4, the relationship between the pressure ($H_O$) on the side of the untreated water and the amount ($Q_D$) of fresh water produced is shown. It is noted from this Fig. 4 that the pressure ($H_O$) required for reverse osmosis is greatly affected by the salt density of the untreated water. Also the pressure $H_O$ corresponding to the origin "O" indicates the head for starting the penetration at the RO module which varies depending on the density. In order to determine the proper operating point of the high pressure pump 15, the combination of the water head ($H_R$) shown in Fig. 3 and the pressure ($H_O$) shown in Fig. 4 needs to be considered. Such combination is shown in Fig. 5 wherein the thick line indicates the required Head for the RO system with a certain fixed opening of the needle valve 25 for a certain untreated water density. The dotted line is an extension of the curve corresponding to one of the curves shown in Fig. 3. When the head discharge curve ($H_P$ - $Q_P$) of the pump 15 is placed on this Fig. 5, the intersecting point "y" of the two curves will indicate the proper operating point of the pump 15 and the point "a" (equal head to point "y") shows the respective $Q_R$ and $Q_D$ among the total $Q_P$ corresponding to the point "y".

Now as mentioned in the beginning part of the explanation of the embodiment, consideration has been given to the case where the salt density of the untreated water at the time of actual operation became lower than that at the time of planning. The suffixes "1", "2" and "3" used hereinafter for $Q_R$, $Q_D$, $Q_P$ , $H_P$ and N show values for the conditions subsisting at (1) the planning stage, (2) the hypothetical operation given the same factors as those prevailing at the planning stage except for the actual density of the original untreated water, and (3) the proper operation under current conditions including the present salt density which is lower than that at the planning stage, respectively.

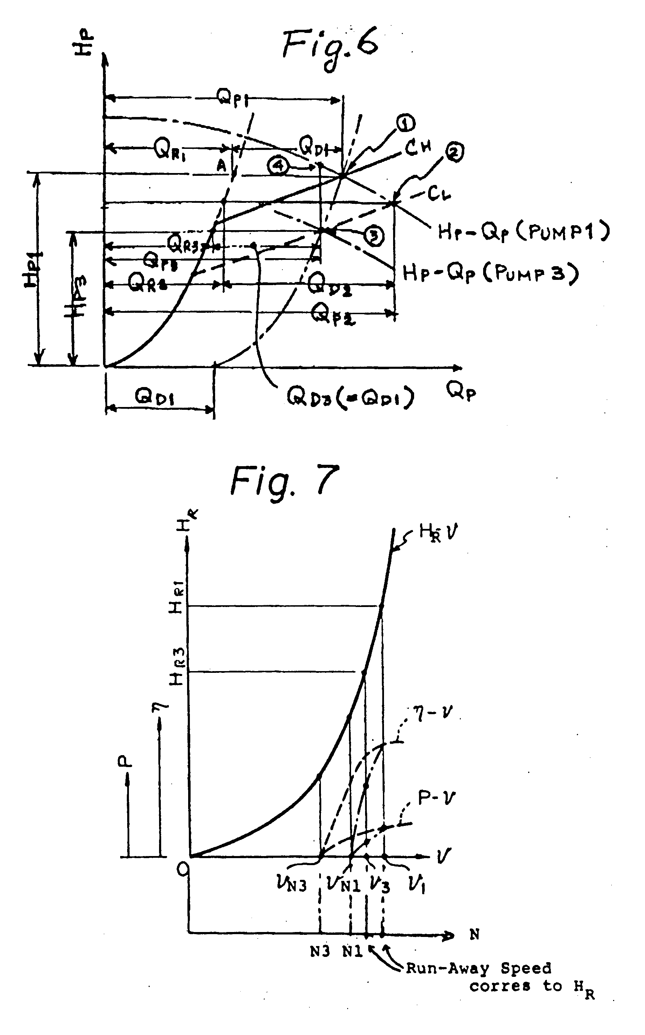

In Fig. 6, the $H_P$ - $Q_P$ (pump-1) curve shows the performance curve of the pump 15 at its rated revolutional speed. The intersection point ① between this curve and the required head curve $C_H$ (corresponding to that shown in Fig. 5 with the salt density subsisting at the stage of initial planning) establishes the operating point of the pump which is suitable for the conditions investigated at the initial planning stage and which produces the guaranteed amount $Q_{D1}$ of fresh water together with the rejected water, $Q_{R1}$. However, the salt density has now lowered. Thus the required head curve $C_L$ becomes as shown in Fig. 6. So, if the pump is operated along the curve $H_P$ - $Q_P$ (pump-1), the operating point would become the point ② on this curve which produces $Q_{D2}$ and $Q_{R2}$, $Q_{D2}$ being in excess of the guaranteed amount $Q_{D1}$. Such operation is not only uneconomical but is undesirable since the facility for the fresh water may not be compatible with the excess amount $Q_{D2}$, and the membrane will deteriorate faster, etc.

So, if the pump output is to be reduced, the valve at the point "X" in the line 14 shown in Fig. 1 has been throttled; however, this also results in a waste of energy. When a curved line parallel to the curve $\overline{AO}$ is drawn from the point ①, the intersecting point ③ of this line with the $C_L$ curve is a proper operating point for the lowered salt density of the present untreated water. So, the head capacity curve passing this point ③ is sought and it is now $H_p$ - $Q_p$ (pump-3). At the operating point ③, $Q_{D3}$ is the same as $Q_{D1}$, which is the guaranteed value. The $H_P$ - $Q_P$ (pump-3) curve corresponds to a pump rotational speed slower than that of the $H_P$ - $Q_P$ (pump-1) curve. Such speed change is effected by the variable speed drive source 16 and the control unit 21. If the pump speed is not changed and the regulation is effected by providing a flow control valve at the point "X" in the fed line 14 (Fig. 1), the loss of head would be equal to that represented by the distance between the points ④ and ③ in Fig. 6, the point ④ being the point on the $H_P$ - $Q_P$ (pump-1) where $Q_P$ is equal to $Q_{P3}$.

Now the operation of the power recovery water wheel 20 will be reviewed.

In this case, the numeral suffixes "1", "2" and "3" are applied to the employed symbols or characters in a manner similar to those already defined in connection with Fig. 6.

The water head $H_R$ at the inlet portion of the water wheel 20 may be expressed as follows:
for the planning stage;

$$H_{R1} = H_{P1} - h_f\, Q_{R1}{}^2$$

for the actual operation (low density);

$$H_{R3} = H_{P3} - h_f\, Q_{R3}{}^2$$

wherein, $h_f$: friction coefficient of resistance 26 (Fig. 2).

Accordingly, the velocity (v) of water flowing from the nozzle through the needle valve 25 will be expressed as noted below.

$$v_1 = k\sqrt{2gH_{R1}}\ \text{(for the planning stage)}$$
$$v_3 = k\sqrt{2gH_{R3}}\ \text{(actual operation; low density)}$$
$$\text{wherein, } k : \text{constant.}$$

The relationship between $H_R$ and v is shown in Fig. 7.

If the nozzle velocity $v_{N1}$ is defined as the velocity corresponding to the revolutional speed $N_1$ of the pump 15 which is almost equal to the run-away speed of the water wheel 20, the power recovery at this speed would become zero.

In Fig. 7, further curves of ($\eta$ - v) and (P - v) are added wherein $\eta$ is the recovery efficiency and P is the power recovered by the water wheel 20.

As is clear from these curves, if $v_3$ approaches the value $v_{N1}$, the efficiency $\eta$ will be greatly lowered and thus the recovery of power is also lowered. If the pump speed is arranged to be variable, the revolutional speed of the pump may be lowered to $N_3$ when the salt density of the untreated water is made lower.

The nozzle velocity $V_{N3}$ corresponding to the revolu tional speed $N_3$ is expressed by

$$v_{N3} = v_{N1}\,\frac{N_3}{N_1}$$

wherein $N_1$ is the revolutional speed of the pump at the planning stage. Therefore, even if the nozzle velocity is lowered from $v_1$ to $v_3$, $\eta$ may be maintained at the high level by shifting the nozzle speed corresponding to the run-away speed from $v_{N1}$ to $v_{N3}$ so that the run-away speed of the water wheel 20 is kept higher than the revolutional speed of the pump, while making the difference between $N_3$ and the run-away speed of the water wheel big.

As explained above, reduction of the revolutional speed of the pump will result in maintaining the high efficiency and high recovery rate while contributing to energy savings.

In the foregoing, the embodiment has been explained with respect to the case where the operating conditions become more moderated. However, the present invention is also applicable to the reverse case where the operating conditions become more severe than those subsisting at the time of planning, i.e. in the case where the salt density of the water to be treated becomes higher in the RO system. In that case, the revolutional speed of the pump would be increased.

The present invention has been explained in detail referring to the specific embodiment, but it should be noted that the present invention is not limited to what has been explained and it may be modified or changed by those skilled in the art.

For instance, if the delivery of the pump is divided into plural passages and fluid flowing through one of the passages is utilized to drive the water wheel for recovering power, the gist of the present invention may be applied thereto. Also, in Fig. 1, the pump 15 and the water wheel 20 are illustrated as being disposed at the opposite sides of the drive source 16. However, it is not necessary to limit the arrangement as illustrated and other arrangements may be workable provided that the pump and the water wheel are coupled directly or indirectly so as to transmit the torque therebetween.

**Claims**

1. A reverse osmosis unit, which comprises:

   a reverse osmosis module (13) having a feed line (14) for untreated liquid and a discharge line (19) for rejected liquid;

   a pump (15) for delivering its output to said module (13);

   a variable speed drive source (16) for driving said pump;

   a water wheel (20) coupled to a combination of said pump and drive source so as to transmit torque therebetween,

said water wheel being arranged to be rotated by rejected water fed through said discharge line; and

control means (21) receiving among others a feed density signal, and controlling accordingly said variable speed drive source such that
(a) the flow rate of untreated liquid delivered in the feed line from said pump is controlled by varying the drive speed of said drive source, and
(b) the revolutional speed of said drive source is regulated to be lower than the runaway speed of said water wheel.

## Revendications

1. Ensemble d'osmose inverse, qui comprend :
un module (13) d'osmose inverse ayant une canalisation d'alimentation (14) destinée au liquide non traité et une canalisation d'évacuation (19) destinée au liquide rejeté,
une pompe (15) qui refoule vers le module (13),
une source motrice (16) à vitesse variable destinée à entraîner la pompe,
une roue hydraulique (20) couplée à la combinaison de la pompe et de la source motrice afin qu'un couple puisse être transmis entre elles,
la roue hydraulique étant disposée afin qu'elle soit entraînée par l'eau rejetée transmise par la canalisation d'évacuation, et
un dispositif (21) de commande qui reçoit notamment un signal de densité d'alimentation et qui règle, en conséquence, la source motrice à vitesse variable de manière que
(a) le débit du liquide non traité transmis dans la canalisation d'alimentation à partir de la pompe soit réglé par variation de la vitesse d'entraînement de la source motrice, et
(b) la vitesse de rotation de la source motrice soit régulée afin qu'elle soit inférieure à la vitesse d'emballement de la roue hydraulique.

## Patentansprüche

1. Umkehrosmoseeinheit, die folgendes aufweist:
ein Umkehrosmosemodul (13) mit einer Speiseleitung (14) für nicht behandelte Flüssigkeit und eine Abgabeleitung (19) für zurückgewiesene Flüssigkeit;
eine Pumpe (15) zur Lieferung ihrer Ausgangsgröße an das Modul (13);
eine eine variable Geschwindigkeit (Drehzahl) besitzende Antriebsquelle (16) zum Antrieb der Pumpe;
ein Wasserrad (20) gekuppelt mit einer Kombination der Pumpe und der Antriebsquelle, um so Drehmoment dazwischen zu übertragen, wobei das Wasserrad angeordnet ist zur Drehung durch zurückgewiesenes Wasser geliefert durch die Abgabeleitung; und Steuermittel (21), die unter anderem ein Speisedichtesignal empfangen und demgemäß eine eine variable Geschwindigkeit oder Drehzahl besitzende Antriebsquelle derart steuern, daß
(a) die Strömungsrate der nicht behandelten Flüssigkeit geliefert in der Speiseleitung von der Pumpe gesteuert wird durch Veränderung der Antriebsdrehzahl der Antriebsquelle, und
(b) die Drehgeschwindigkeit oder Drehzahl der Antriebsquelle so reguliert wird, daß sie niedriger ist als die Leerlaufgeschwindigkeit oder -Drehzahl des Wasserrades.

Fig. 1

Brackish water

# Fig. 2

# Fig. 3

## Fig. 4

DENSITY LARGE

DENSITY SMALL

$H_O$

$Q_D$

O

## Fig. 5

$H_r$-$Q_p$(PUMP)

REQUIRED HEAD
FOR RO SYSTEM

$H_P$

a

y

$Q_R$

$Q_D$

$Q_P$

9

*Fig. 6*

*Fig. 7*